# NEUE EUROPÄISCHE PATENTSCHRIFT

(11) **EP 1 186 857 B2**
(45) Veröffentlichungstag und Bekanntmachung des Hinweises auf die Entscheidung über den Einspruch: **02.12.2009**
(45) Hinweis auf die Patenterteilung: 18.05.2005
(21) Anmeldenummer: 01120408.8
(22) Anmeldetag: 27.08.2001
(51) Int. Cl.: G01B 11/275, G01B 21/26

(54) **Verfahren und Vorrichtung zur programmgesteuerten Fahrwerkvermessung**
Method and device for program controlled geometry measurement of a vehicle
Procédé et dispositif pour la mesure contrôlée par programme de la géométrie d'un véhicule

(30) Priorität: 02.09.2000 DE 10043358
(43) Veröffentlichungstag der Anmeldung: 13.03.2002
(73) Patentinhaber: Beissbarth GmbH, 80993 München (DE)
(72) Erfinder: Dry, Craig, 85283 Wolnzach (DE); Schommer, Stefan, 85716 Unterschleissheim (DE)
(74) Vertreter: Klunker . Schmitt-Nilson . Hirsch

(56) Entgegenhaltungen:
- EP-A- 0 457 873
- EP-A- 0 679 865
- EP-B- 0 689 512
- WO-A-99//23451
- US-A- 3 465 577
- US-A- 3 648 539
- US-A- 5 748 301

## Beschreibung

Die Erfindung betrifft ein Verfahren und eine Vorrichtung zur Fahrwerkvermessung oder Achsvermessung bei Kraftfahrzeugen, wie Pkw und Lkw.

Fahrwerkmeßgeräte, bei denen der Meßvorgang mit Unterstützung durch ein Programm durchgeführt wird, sind beispielsweise aus der WO 99/23451 bekannt. Dabei werden bei der Fahrwerkvermessung dem Bedienungsmann Anweisungen und Hilfen gegeben, damit er die Fahrwerkvermessung und auch die Justage des Fahrwerks unter Berücksichtigung der Meßergebnisse ordnungsgemäß durchführen kann. Bekanntlich müssen bei der Fahrwerkvermessung die Räder auf verschiedene Einschlagstellungen eingestellt werden, beispielsweise auf "Fahrt gerade aus", auf einen Lenkeinschlag von 10 bzw. 20° nach links und nach rechts und auf gleiche Einzelspur links und rechts. Der eine oder andere Automobilhersteller fordert noch die Einstellung des maximalen Lenkausschlages, um zu überprüfen, ob der Wendekreises innerhalb eines Sollbereiches liegt, und/oder das Halten von einem Rad auf 0°, um den Sturz bei Sput 0° einzustellen. Diese Einschlagbewegungen der Räder werden bei dem bekannten Verfahren noch von Hand durchgeführt, was umständlich ist, weil der Bedienungsmann seinen Arbeitsplatz unter dem Fahrzeug, wo die Justagearbeiten durchgeführt werden, verlassen und das Lenkrad einschlagen muss. Erst danach kann die Fahrwerkvermessung und die damit verbundene Fahrwerkjustage fortgeführt werden.

Aus der EP 0 689 512 B1 ist eine ferngesteuerte Einrichtung zum Einschlagen des Lenkrads eines Kraftfahrzeuges bekannt. Mit dieser Vorrichtung kann das Lenkrad in bestimmte Positionen gedreht und in die Ausgangsposition zurückgebracht werden. Wenn eine derartige Vorrichtung bei der Fahrwerkvermessung eingesetzt wird, ergibt sich noch das Problem, dass der Zeitpunkt des Lenkradeinschlages und auch das Maß des Lenkradeinschlages, beispielsweise 10° oder 20° nach links oder rechts, falsch gewählt werden. Wenn der Zeitpunkt des Lenkradeinschlages falsch gewählt wird, beispielsweise dann, wenn ein vorangehender Verfahrensschritt noch nicht abgeschlossen ist, kann es zu Fehlern bei der Messung kommen. Wenn der Betrag des Lenkradeinschlages falsch gewählt wird, sind die Meßergebnisse nicht mit den entsprechenden Werten in den Angaben der Fahrzeughersteller vergleichbar.

EP 0 679 865 A1 offenbart desweiteren ein Verfahren gemäß dem Oberbegriff von Anspruch 1. Bei diesem Verfahren werden die Räder des Kraftfahrzeugs mit Hilfe einer programmgesteuerten maschinellen Einrichtung in bestimmten Positionen eingeschlagen bzw. ausgerichtet. Die Betätigung des Lenkrads des Kraftfahrzeugs wird vom Bediener durchgeführt, der stets unter Berücksichtigung der Anweisungen der maschinellen Einrichtung arbeitet. Die Nachteile des Verfahrens von EP 0 679 865 A1 entsprechen analog den Nachteilen der ferngesteuerten Einrichtung gemäß EP 0 689 512 B1. nisse nicht mit den entsprechenden Werten in den Angaben der Fahrzeughersteller vergleichbar.

Der Erfindung liegt demgegenüber die Aufgabe zu Grunde, eine Fahrwerk- oder Achsvermessung so durchführen zu können, dass der Bedienungsmann mit möglichst wenig Handgriffen außer der Justage des Fahrwerks belastet wird, wobei insbesondere eine zeitlich und dem Betrag nach korrekte Einstellung der Räder ermöglicht wird.

Dazu ist das erfindungsgemäße Verfahren dadurch gekennzeichnet, dass die Räder einer lenkbaren Achse durch eine programmgesteuerte maschinelle Einrichtung unter der Steuerung eines Mikroprozessors in der maschinellen Einrichtung in die zur Durchführung der Fahrwerkvermessung erforderlichen Positionen eingeschlagen bzw. ausgerichtet werden und dass es sich bei den in dem Fahrwerkvermessungsprogramm hinterlegten Steuerungsabläufen um die automatische Einstellung der Räder auf "Fahrt gerade aus", das automatische Einschlagen der Räder nach links und nach rechts, die automatische Einstellung auf gleiche Einzelspur links und rechts, den maximalen Lenkeinschlag und das Halten eines Rades auf 0° handelt.
Dabei ist vorteilhaft, dass die Steuerungsabläufe sozusagen als Sequenzen in dem Fahrwerkvermessungsprogramm hinterlegt sind und je nach Konfiguration des Fahrwerkvermessungsprogramms aufgerufen werden können.

Da die Einstellung der Räder durch die programmgesteuerte, maschinelle Einrichtung durchgeführt wird, muß der Bedienungsmann jedenfalls nicht seinen Arbeitsplatz zur Durchführung der Einstellungen am Fahrwerk beziehungsweise der Justage des Fahrwerks verlassen. Auch muss der Bedienungsmann nicht durch das offene Fahrerfenster greifen, um das Lenkrad zu bedienen, was dazu führen könnte, dass der Messstrahl zwischen Geräten des Achsvermessungssystems unterbrochen würde. Da die Einstellung der Räder direkt programmgesteuert ist, kann ein korrekter zeitlicher Ablauf und die korrekten Beträge des Lenkradeinschlages exakt vorgegeben werden.

Weiterhin kann bei einer Hebebühne als Arbeitsplatz bei angehobener Hebebühne sowohl die Vermessung als auch die Einstellarbeiten durchgeführt werden, ohne dass eine Leiter oder ähnliche Hilfsmittel erforderlich sind, damit der Bedienungsmann das Lenkrad einschlagen bzw. einstellen kann.

Schließlich müssen bei einer kompletten Fahrwerkvermessung bzw. Justage von dem Bedienungsmann nur die absolut notwendigen Handhabungen und Eingriffe getätigt werden. Dadurch wird der Bedienungsmann von Routinetätigkeit entlastet, und die Vermessung und Einstellung des Fahrwerks wird genauer und reproduzierbar.

Eine vorteilhafte Ausgestaltung des erfindungsgemäßen Verfahrens ist dadurch gekennzeichnet, dass die Räder der lenkbaren Achse unter der Steuerung eines Mikroprozessors in der maschinellen Einrichtung in die zur Durchführung der Fahrwerkvermessung erforderlichen Positionen eingeschlagen bzw. ausgerichtet werden. Bei der Durchführung der Programmsteuerung in dem Mikroprozessor in der maschinellen Einrichtung, kann eine direkte Kommunikation der maschinellen Einrichtung beispielsweise über einen Kommunikationsprozessor mit der Meßsensorik erfolgen. Da das Programm in dem Mikroprozessor der maschinellen Einrichtung hinterlegt ist, muss die maschinelle Einrichtung nur durch einen Startbefehl gestartet werden.

Eine vorteilhafte Ausgestaltung des erfindungsgemäßen Verfahrens ist dadurch gekennzeichnet, dass die Steuerungsabläufe zu Gruppen von Steuerungsabläufen zusammengefaßt werden, wobei eine Gruppe von Steuerungsabläufen die Bewegung der Räder der lenkbaren Achse während einer Fahrwerkvermessung definiert. Dabei werden beispielsweise die vorstehend genannten Steuerungsabläufe zu einer Gruppe zusammengefaßt, so dass ein Meßlauf als Ganzes aufgerufen werden kann, wenn er durchgeführt werden soll, beispielsweise als Eingangsmessung oder als Kontrollmessung nach der Justage des Fahrwerks.

Eine vorteilhafte Ausgestaltung des erfindungsgemäßen Verfahrens ist dadurch gekennzeichnet, dass die Steuerungsabläufe zu Meßläufen zusammengefaßt werden, die die Ermittlung der Fahrwerkmeßwerte vor, während und nach den Einstellarbeiten am Fahrzeug umfasst. Dadurch werden in vorteilhafter Weise die Steuerungsabläufe zusammengefaßt, so dass die Fahrwerkvermessung und die Fahrwerkjustage als einheitliches Programm ablaufen können.

Eine vorteilhafte Ausgestaltung des erfindungsgemäßen Verfahrens ist dadurch gekennzeichnet, dass die Steuerungsabläufe fahrzeugspezifische Abläufe sind. In dem zentralen Rechner der Fahrwerkvermessungseinrichtung sind ohnehin fahrzeugspezifische Daten für die Vermessung der verschiedenen Fahrzeugtypen der verschiedenen Hersteller hinterlegt. Die Steuerungsabläufe können daher ohne besonderen Mehraufwand an die vorhandenen fahrzeugspezifischen Daten angefügt werden. Bei einer Fahrwerkvermessung muß dann nur noch der richtige Fahrzeugtyp ausgewählt werden, um zu korrekten Ergebnissen zu gelangen.

Eine vorteilhafte Ausgestaltung des erfindungsgemäßen Verfahrens ist dadurch gekennzeichnet, dass dem Bedienungsmann akustische und/oder optische und/oder Sprachhinweise über Meßergebnisse, erforderliche Eingaben oder Handhabungen gegeben werden. Dadurch wird in vorteilhafter Weise erreicht, dass der Bedienungsmann immer über den Fortgang der Fahrwerkvermessung informiert ist und eine Anweisung erhält, wann er welche Justagearbeit durchführen kann und soll.

Eine vorteilhafte Ausgestaltung des erfindungsgemäßen Verfahrens, wobei die Fahrwerkvermessung auf einer Hebebühne durchgeführt wird, ist dadurch gekennzeichnet, dass die Ansteuerung der Hebebühne ebenfalls von dem zentralen Rechner durchgeführt wird. Auch bei der Ansteuerung der Hebebühne ist es wichtig, dass diese zum richtigen Zeitpunkt hoch- oder heruntergefahren wird. Der korrekte Zeitablauf für die Ansteuerung der Hebebühne kann ebenfalls durch die Anbindung an den zentralen Rechner der Fahrwerkvermessungseinrichtung gewährleistet werden.

Eine vorteilhafte Ausgestaltung des erfindungsgemäßen Verfahrens ist dadurch gekennzeichnet, dass spezifische Einstellhöhen für die Ansteuerung der Hebebühne für verschiedene Bedienungspersonen ebenfalls in dem zentralen Rechner hinterlegt werden, sodass die Hebebühne programmgesteuert in die Position gefahren wird, die für den jeweiligen Bedienungsperson optimal ist.

Eine vorteilhafte Ausgestaltung des erfindungsgemäßen Verfahrens ist dadurch gekennzeichnet, dass die Verstellung der Räder durch die maschinelle Einrichtung oder die Ansteuerung der Hebebühne erst dann erfolgt, wenn der Bedienungsmann einen Freigabebefehl an den zentralen Rechner gibt, wodurch in vorteilhafter Weise dem Bedienungsmann eine Eingriffsmöglichkeit gegeben wird, wenn der Meßvorgang beispielsweise wegen eines Unfalls oder dergleichen abgebrochen werden muß.

Zur Lösung der genannten Aufgabe ist eine Vorrichtung zur programmgesteuerten Fachwerksvermessung gemäß dem unabhängigen Anspruch 9 vorgesehen.

Bei den Einstell- bzw. Justagearbeiten können notwendige Lenkbewegungen über die Bedienungselemente der Fahrwerkvermessungseinrichtung, beispielsweise Tastatur, Fembedienung, Sprachsteuerung oder dergleichen gesteuert werden, wobei ein zusätzlicher Bedienungsmann, der bisher für die Lenkbewegungen der Räder des Fahrzeugs verantwortlich ist, nicht mehr erforderlich ist.

Eine vorteilhafte Ausgestaltung der erfindungsgemäßen Vorrichtung ist dadurch gekennzeichnet, dass das Programm zur Steuerung die Räder der lenkbaren Achse in einem Mikroprozessor in der maschinellen Einrichtung abgelegt ist.

Eine vorteilhafte Ausgestaltung der erfindungsgemäßen Vorrichtung ist dadurch gekennzeichnet, dass die maschinelle Vorrichtung zwischen dem Lenkrad des Fahrzeuges und einem Festpunkt an dem Fahrzeug angeordnet und in der Lage ist, das Lenkrad des Fahrzeuges zu drehen. Diese Ausgestaltung der erfindungsgemäßen Vorrichtung hat den Vorteil, dass auf die bisherige Vorgehensweise, bei der der Lenkradeinschlag über die Betätigung des Lenkrades erfolgt, beibehalten wird, sodass das Verhalten des Fahrzeuges optimal simuliert wird. Die bekannte Vorrichtung wird dahingehend modifiziert, dass sie direkt von dem Mikroprozessor in der maschinellen Einrichtung angesteuert wird.

Eine weitere vorteilhafte Ausgestaltung der erfindungsgemäßen Vorrichtung ist dadurch gekennzeichnet, dass an dem Lenkrad eine Lenkradwasserwaage angeordnet ist, die ebenfalls mit dem zentralen Rechner der Fahrwerkvermessungseinrichtung oder dem Mikroprozessor in der maschinellen Einrichtung verbunden ist und die Information über die Nulllage des Lenkrads an den zentralen Rechner abgibt. Dadurch kann die Vorrichtung mit der Information von der Lenkradwasserwaage in die Ausgangslage (Nulllage) zurückgebracht werden, ohne dass zusätzliche Mittel an der maschinellen Einrichtung für diesen Zweck erforderlich wären.

Eine vorteilhafte Ausgestaltung der erfindungsgemäßen Vorrichtung ist dadurch gekennzeichnet, dass die maschinelle Einrichtung einen Motorantrieb an Drehuntersätzen aufweist, auf denen die Räder der lenkbaren Achse bei der Fahrwerkvermessung aufstehen. Diese Ausgestaltung der erfindungsgemäßen Vorrichtung hat den Vorteil, dass kein zusätzliches Gerät in dem Innenraum des Fahrzeuges installiert werden muss. Auch muss kein zusätzliches Gerät bei jeder Fahrwerkvermessung installiert werden, weil der Motorantrieb in den Drehuntersätzen ohne weiteres jederzeit zur Verfügung steht.

Eine vorteilhafte Ausgestaltung der erfindungsgemäßen Vorrichtung ist dadurch gekennzeichnet, dass an dem zentralen Rechner und an der maschinellen Einrichtung Schnittstellen zur drahtlosen Übertragung von Daten und Befehlen zwischen dem zentralen Rechner und der maschinellen Einrichtung vorgesehen sind, wobei die Datenübertragung zwischen der maschinellen Einrichtung und dem zentralen Rechner ohne zusätzliche Handhabung, wie das Einstecken von Kabeln, erfolgen kann.

Eine vorteilhafte Ausgestaltung der erfindungsgemäßen Vorrichtung ist gekennzeichnet durch eine Fernbedienung mit der dem zentralen Rechner ein Freigabebefehl anzugeben ist, um die Betätigung der maschinellen Vorrichtung zu ermöglichen, wodurch die oben genannte Kontrollmöglichkeit in einfacher Weise verwirklicht wird.

Eine vorteilhafte Ausgestaltung der erfindungsgemäßen Vorrichtung, wobei die Fahrwerkvermessung auf einer Hebebühne durchgeführt wird, die eine Steuereinrichtung umfasst, ist dadurch gekennzeichnet, dass an der Steuereinrichtung der Hebebühne eine Schnittstelle zur Übergabe von Daten und Befehlen zwischen der Steuereinrichtung der Hebebühne und dem zentralen Rechner vorgesehen ist. Damit wird die Hebebühne bzw. deren Steuerung vollständig in das Fahrwerkvermessungssystem integriert.

Ausführungsbeispiele der Erfindung werden nun anhand der beiliegenden Zeichnungen beschrieben. Es zeigen:
- Fig. 1: eine schematische Draufsicht auf einen Hebebühnearbeitsplatz mit einem Fahrzeug;
- Fig. 2: ein Ablaufdiagramm für eine Fahrwerkvermessung; und
- Fig. 3: eine Draufsicht auf eine Vorrichtung zum Einschlagen des Lenkrads eines Fahrzeugs.

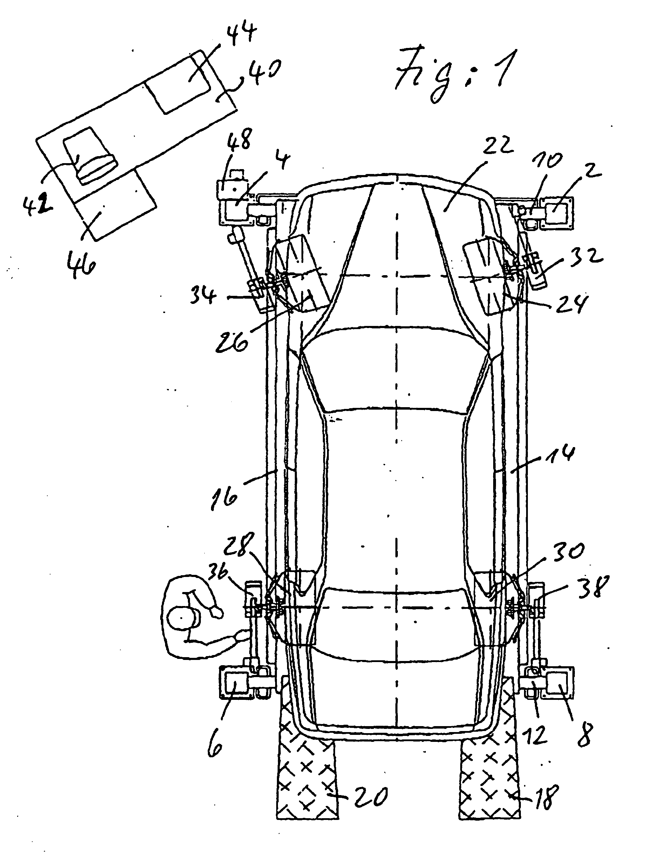

In Fig. 1 ist schematisch eine Hebebühne in Draufsicht dargestellt, die vier Säulen 2, 4, 6, 8 aufweist, an denen zwei Querträger 10, 12 auf und ab verfahrbar angeordnet sind, auf denen zwei Fahrschienen 14, 16 liegen. Schließlich sind zwei Rampen 18, 20 vorgesehen, über die ein Fahrzeug auf die Fahrschienen 14, 16 fahren kann. Auf den Fahrschienen 14, 16 steht ein Fahrzeug 22.

An den vier Rädern 24, 26, 28, 30 des Fahrzeugs 22 sind Meßköpfe 32, 34, 36, 38 angeordnet, wie sie bei Achsvermessungssystemen zur Fahrwerkvermessung bekannt sind. Es ist ein sogenanntes Acht-Geber-Achsmessgerät gezeigt, mit dem die Radstellungen der Räder des Fahrzeuges untereinander gemessen werden können. Die Meßwerte der Meßköpfe werden in einem zentralen Rechner ausgewertet und in die Radstellungsdaten umgesetzt. Der Rechner ist in einer Konsole 40 angeordnet und mit einem Monitor 42 und einem Drucker 44 verbunden. Die Tastatur für den Rechner kann auf einen Tableau 46 angeordnet sein. Bei dem gezeigten Ausführungsbeispiel ist der Rechner über eine drahtlose Kommunikationsverbindung mit den Meßköpfen 32 bis 38 verbunden. Der zentrale Rechner ist ferner über eine drahtlose Kommunikationsverbindung mit einer Steuereinrichtung 48 der Hebebühne verbunden, um deren Aufwärts- und Abwärtsbewegung zu steuern.

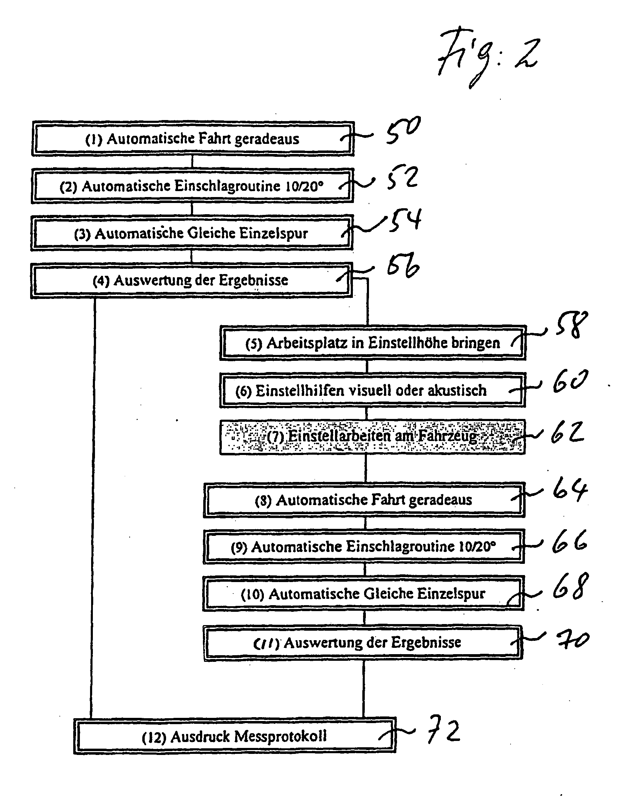

Fig. 2 zeigt den Ablauf der Fahrwerkvermessung, und insbesondere die Abfolge der Lenkradbewegungen, wie sie bei einer Fahrwerkvermessung stattfindet. Bei einer Fahrwerkvermessung und -justage werden die Räder zunächst in einem Schritt 50 automatisch auf "Fahrt gerade aus" gestellt. Nachdem Einlesen der entsprechenden Meßwerte in den zentralen Rechner wird als Nächstes die automatische Einschlagroutine auf 10° bzw. 20° nach links und nach rechts an den Rädern der lenkbaren Achse in einem Schritt 52 durchgeführt. Nach Einlesen der entsprechenden Meßwerte aus den Meßköpfen 32 bis 38 wird in einem Schritt 54 automatisch eine Einstellung an den Rädern 24, 26 auf gleiche Einzelspur der Räder durchgeführt. Nachdem die Meßwerte nach diesem Schritt 54 in den Rechner eingelesen worden sind, werden die Meßergebnisse ausgewertet in einem Schritt 56 und sogleich oder später ausgedruckt.

Nachdem das Fahrwerk auf diese Weise vermessen worden ist, werden gegebenenfalls Justagearbeiten an den Radaufhängungen der Räder erforderlich. Wenn der Arbeitsplatz eine Hebebühne ist, wird für die Justagearbeiten die Hebebühne in dem Schritt 58 in Einstellhöhe gebracht, so dass die Justagearbeiten unter dem Fahrzeug durchgeführt werden können. Auch bei der Justage erhält der Bedienungsmann Einstellhilfen visuell oder akustisch, so dass er die erforderlichen Justagearbeiten mit der erforderlichen Genauigkeit und Sorgfalt durchführen kann. Entsprechend den Einstellhilfen werden dann die Einstellarbeiten am Fahrzeug im Schritt 62 durchgeführt.

Nachdem die Einstellarbeiten ausgeführt sind, wird eine Kontroll-Fahrwerkvermessung durchgeführt, die in den Schritten 64, 66, 68, 70 ebenso abläuft wie in den Schritten 50 bis 56. Anschließend werden die Meßergebnisse in einem Schritt 72 auf dem Drucker 44 ausgedruckt.

Aus diesem Ablauf ist ersichtlich, dass während der Messung und zur Justage einige Manipulationen zum Einschlagen bzw. Einstellen der Räder der lenkbaren Achse und auch der Bewegungen der Hebebühne notwendig sind. Alle diese Bewegungen werden bei dem bevorzugten Ausführungsbeispiel der Erfindung automatisch und integriert in dem Fahrwerkvermessungsverfahren durchgeführt.

Das Programm führt somit den Bedienungsmann nach Feststellung der Eingangswerte automatisch in den Ablauf für gegebenenfalls notwendige Justageeingriffe und anschließend durch die Ausgangsvermessung.

Bei dem erfindungsgemässen Verfahren werden die Räder einer lenkbaren Achse maschinell in die zur Durchführung der Fahrwerkvermessung erforderlichen Positionen eingeschlagen bzw. ausgerichtet werden. Die Steuerungsabläufe automatische Einstellung der Räder auf "Fahrt gerade aus", automatische Einschlagen der Räder nach links und nach rechts und automatische Einstellung auf gleiche Einzelspur links und rechts sind in dem Fahrwerkvermessungsprogramm als fahrzeugspezifische Steuerungsabläufe hinterlegt und werden zu Gruppen von Steuerungsabläufen zusammengefaßt, wobei eine Gruppe von Steuerungsabläufen die Bewegung der Räder der lenkbaren Achse während einer Fahrwerkvermessung definiert.

Die Gruppen werden wiederum zu Meßläufen zusammengefaßt, die die Ermittlung der Fahrwerkmeßwerte vor, während und nach den Einstellarbeiten am Fahrzeug umfassen. Im Rahmen des Verfahrens werden dem Bedienungsmann akustische und/oder optische und/oder Sprachhinweise über Meßergebnisse, erforderliche Eingaben oder Handhabungen gegeben werden. Wen die Fahrwerkvermessung auf einer Hebebühne durchgeführt wird, wird die Ansteuerung der Hebebühne ebenfalls von dem zentralen Rechner durchgeführt. Die Vorrichtung ist so ausgelegt, dass die Verstellung der Räder oder der Ansteuerung der Hebebühne erst dann erfolgt, wenn der Bedienungsmann einen Freigabebefehl an den zentralen Rechner gibt.

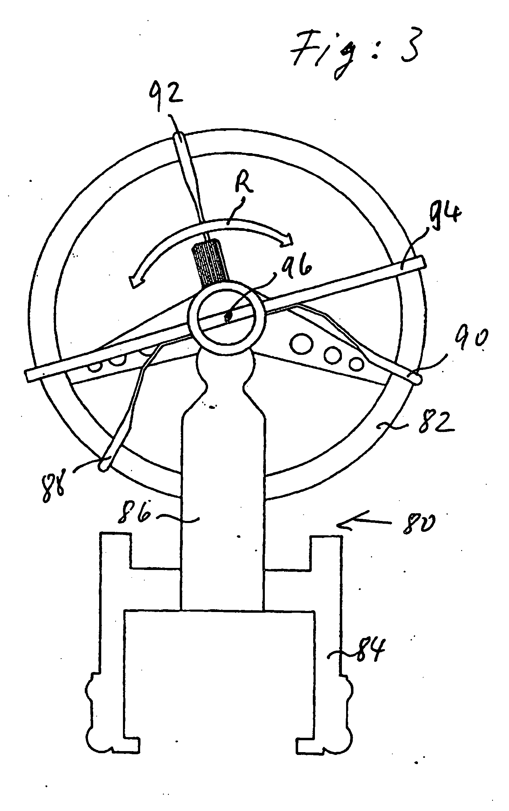

Fig. 3 zeigt schematisch eine Vorrichtung 80 zum Einschlagen eines Lenkrads 82. Die Vorrichtung 80 umfasst eine Verankerung 84, mit der sie unter dem Fahrersitz verankert werden kann. Des Weiteren umfasst die Vorrichtung 80 ein Gehäuse 86, in dem der Antriebsmotor für die Vorrichtung untergebracht ist, und umfasst drei Klauen 88, 90, 92, die an einem Arm 94 befestigt sind, der mit Hilfe des Motors in dem Gehäuse 86 um eine Drehachse 96 verschwenkbar ist. Die Klauen 88, 90, 92 können fest auf dem Lenkrad 82 angeordnet werden, so dass bei einer Verschwenkung des Arms 94 das Lenkrad in Richtung des Pfeils R hin und her gedreht werden kann.

Des Weiteren umfasst die Vorrichtung eine Lenkradwaage (nicht gezeigt), die ebenso wie die Vorrichtung 80 über eine Schnittstelle und eine drahtlose Kommunikationsverbindung mit dem zentralen Rechner der Fahrwerkvermessungseinrichtung verbunden ist. Die Nullstellung des Lenkrades wird durch die Lenkradwasserwaage eingegeben.

## Patentansprüche

1. Verfahren zur programmgesteuerten Fahrwerkvermessung bei Kraftfahrzeugen, bei dem die Schritte des Messverfahrens unter der Steuerung eines zentralen Rechners für die Fahrwerkvermessung durchgeführt werden, wobei Steuerungsabläufe in dem Fahrwerkvermessungsprogramm hinterlegt werden,
**dadurch gekennzeichnet, dass**
die Räder einer lenkbaren Achse durch eine programmgesteuerte maschinelle Einrichtung unter der Steuerung eines Mikroprozessors in der maschinellen Einrichtung in die zur Durchführung der Fahrwerkvermessung erforderlichen Positionen eingeschlagen bzw. ausgerichtet werden und dass es sich bei den in dem Fahrwerkvermessungsprogramm hinterlegten Steuerungsabläufen um die automatische Einstellung der Räder auf "Fahrt gerade aus", das automatische Einschlagen der Räder nach links und nach rechts, die automatische Einstellung auf gleiche Einzelspur links und rechts, den maximalen Lenkeinschlag und das Halten eines Rades auf 0° handelt.

2. Verfahren nach Anspruch 1, **dadurch gekennzeichnet, dass** die Steuerungsabläufe zu Gruppen von Steuerungsabläufen zusammengefasst werden, wobei eine Gruppe von Steuerungsabläufen die Bewegung der Räder der lenkbaren Achse während einer Fahrwerkvermessung definiert.

3. Verfahren nach Anspruch 1, **dadurch gekennzeichnet, dass** die Steuerungsabläufe zu Messläufen zusammengefasst werden, die die Ermittlung der Fahrwerkmesswerte vor, während und nach den Einstellarbeiten am Fahrzeug umfasst.

4. Verfahren nach einem der vorhergehenden Ansprüche, **dadurch gekennzeichnet, dass** die Steuerungsabläufe fahrzeugspezifische Abläufe sind.

5. Verfahren nach einem der vorhergehenden Ansprüche, **dadurch gekennzeichnet, dass** dem Bedienungsmann akustische und/oder optische und/oder Sprachhinweise über Messergebnisse, erforderliche Eingaben oder Handhabungen gegeben werden.

6. Verfahren nach einem der vorhergehenden Ansprüche, wobei die Fahrwerkvermessung auf einer Hebebühne durchgeführt wird, **dadurch gekennzeichnet, dass** die Ansteuerung der Hebebühne ebenfalls von dem zentralen Rechner durchgeführt wird.

7. Verfahren nach Anspruch 6, **dadurch gekennzeichnet, dass** spezifische Einstellhöhen für die Ansteuerung der Hebebühne für verschiedene Bedienungspersonen ebenfalls in dem zentralen Rechner hinterlegt werden.

8. Verfahren nach einem der vorhergehenden Ansprüche, **dadurch gekennzeichnet, dass** die maschinelle Verstellung der Räder oder der Ansteuerung der Hebebühne erst dann erfolgt, wenn der Bedienungsmann einen Freigabebefehl an den zentralen Rechner gibt.

9. Vorrichtung zur programmgesteuerten Fahrwerkvermessung bei Kraftfahrzeugen mit einer Fahrwerkmesseinrichtung, die die einzelnen Schritte der Fahrwerkvermessung unter der Steuerung eines zentralen Rechners ausführt, wobei Steuerungsabläufe in dem Fahrwerkvermessungsprogramm hinterlegt sind,
**dadurch gekennzeichnet, dass**
eine programmgesteuerte maschinelle Einrichtung (80) unter der Steuerung eines Mikroprozessors in der maschinellen Einrichtung vorgesehen ist, die geeignet ist, die Räder (24 - 30) einer lenkbaren Achse in die zur Durchführung der Fahrwerkvermessung erforderlichen Positionen einzuschlagen bzw. auszurichten, und dass es sich bei den in dem Fahrwerkvermessungsprogramm hinterlegten Steuerungsabläufen um die automatische Einstellung der Räder auf "Fahrt gerade aus", das automatische Einschlagen der Räder nach links und nach rechts, die automatische Einstellung auf gleiche Einzelspur links und rechts, den maximalen Lenkeinschlag und das Halten eines Rades auf 0° handelt.

10. Vorrichtung nach Anspruch 9, **dadurch gekennzeichnet, dass** die maschinelle Einrichtung (80) zwischen dem Lenkrad des Fahrzeuges und einem Festpunkt an dem Fahrzeug angeordnet und in der Lage ist, das Lenkrad des Fahrzeuges zu drehen.

11. Vorrichtung nach Anspruch 9, **dadurch gekennzeichnet, dass** an dem Lenkrad eine Lenkradwasserwaage angeordnet ist, die ebenfalls mit dem Mikroprozessor in der maschinellen Einrichtung (80) verbunden ist und die Information über die Nulllage des Lenkrads an den zentralen Rechner abgibt.

12. Vorrichtung nach Anspruch 9, **dadurch gekennzeichnet, dass** die maschinelle Einrichtung einen Motorantrieb an den Drehuntersätzen aufweist, auf denen die Räder der lenkbaren Achse bei der Fahrwerkvermessung aufstehen.

13. Vorrichtung nach einem der Ansprüche 9 bis 12, **dadurch gekennzeichnet, dass** an dem zentralen Rechner und an der maschinellen Vorrichtung (80) Schnittstellen zur drahtlosen Übertragung von Daten und Befehlen zwischen dem zentralen Rechner und der maschinellen Einrichtung vorgesehen sind.

14. Vorrichtung nach einem der Ansprüche 9 bis 13, **gekennzeichnet durch** eine Fernbedienung mit der dem zentralen Rechner ein Freigabebefehl anzugeben ist, um die Betätigung der maschinellen Einrichtung (80) zu ermöglichen.

15. Vorrichtung nach einem der Ansprüche 10 bis 14, wobei die Fahrwerkvermessung auf einer Hebebühne durchgeführt wird, die eine Steuereinrichtung umfasst, **dadurch gekennzeichnet, dass** an der Steuereinrichtung (48) der Hebebühne eine Schnittstelle zur Übergabe von Daten und Befehlen zwischen der Steuereinrichtung der Hebebühne und dem zentralen Rechner vorgesehen ist.

## Claims

1. Method for performing program-controlled wheel alignment measurements on motor vehicles in which the wheel alignment measurements are carried out under the control of a central computer for the wheel alignment measurements, wherein control procedures are stored in the wheel alignment measurement program,
**characterized in that**
the wheels of a steerable axis are turned and positioned, respectively, to the positions required for carrying out the wheel alignment measurement by a program-controlled machine-like device under the control of a microprocessor in the machine-like device and that the control procedures being stored in the wheel alignment measurement program are the automatic positioning of the wheels to "driving straight ahead", the automatic turning of the wheels to the left and to the right, the automatic positioning of the wheels to single track left and right, the maximum turning of the steering wheel and the maintaining of a wheel had 0°.

2. Method according to claim 1, **characterized in that** the control procedures are grouped into groups of control procedures whereby one group of control procedures defines the movement of the wheels of the steerable axis during a wheel alignment measurement.

3. Method according to claim 1, **characterized in that** the control procedures are put together to measurement runs which comprise the evaluation of the wheel alignment measurement values prior, during and after the adjustment procedures on the vehicle.

4. Method according to any of the preceding claims, **characterized in that** the control procedures are vehicle specific procedures.

5. Method according to any of the preceding claims, **characterized in that** acoustical and/or optical and/or voice statements concerning measurement results, required inputs or manipulations are given to the operator.

6. Method according to any of the preceding claims, wherein the wheel alignment measurement is carried out on a platform hoist, **characterized in that** the control of the hoist is also carried out by the central computer.

7. Method according to claim 6, **characterized in that** specific level inputs for the control of the hoist are stored for different operators also in the central computer.

8. Method according to any of the preceding claims, **characterized in that** the machine controlled movement of the wheels or the control of the hoist is effected only when the operator issues a clearing instruction to the central computer.

9. Apparatus for performing a program-controlled wheel alignment measurement of motor vehicles having a wheel alignment measurement device carrying out the steps of the wheel alignment measurement under the control of a central computer, wherein control procedures are stored in the wheel alignment measurement program,
**characterized in that**
a program-controlled machine-like device (80) under the control of a microprocessor in the machine-like device is provided, which is adapted to turn and position, respectively, the wheels (24 - 30) of a steerable axis to the positions required for carrying out the wheel alignment measurement and that the control procedures being stored in the wheel alignment measurement program are the automatic positioning of the wheels to "driving straight ahead", the automatic turning of the wheels to the left and to the right, the automatic positioning of the wheels to single track left and right, the maximum turning of the steering wheel and the maintaining of a wheel had 0°.

10. Apparatus according to claim 9, **characterized in that** the machine-like device (80) is arranged between the steering wheel of the vehicle and a fixed point on the vehicle and is adapted to turn the steering wheel of the vehicle.

11. Apparatus according to claim 9, **characterized in that** a steering wheel level device is arranged on the steering wheel which level device is also connected to the microprocessor in the machine-like device (80) and issues the information concerning the zero position of the steering wheel to the central computer.

12. Apparatus according to claim 9, **characterized in that** the machine-like device comprises a motor-drive at the turntable platforms on which the wheels of the steerable axis stand during the wheel alignment measurement.

13. Apparatus according to any of the claims 9 to 12, **characterized in that** interface devices for the wireless transmission of data and commands between the central computer of the wheel alignment apparatus and the machine-like device are provided on the central computer and on the machine-like device (80).

14. Apparatus according to one of the claims 9 to 13, **characterized by** a remote control by which a clearing instruction may be sent to the central computer in order to enable the operation of the machine-like device (80).

15. Apparatus according to any of the claims 9 to 14, where the wheel alignment measurement is carried out on a platform hoist comprising a control means, **characterized in that** an interface device for transferring data and instructions between the control means of the hoist and the central computer is provided on the control means (48).

## Revendications

1. Procédé pour la mesure commandée à programme du mécanisme de roulement aux véhicules moteurs, où les pas du procédé de mesure se réalisent sous la commande d'un ordinateur central pour la mesure du mécanisme de roulement, où les pas de commande sont prévus dans le programme pour la mesure du mécanisme de roulement,
**caractérisé en ce que**
les roues d'un essieu qui peut être commandé sont respectivement tournées et orientées dans les positions nécessaires pour la réalisation de la mesure du mécanisme de roulement à la commande d'un microprocesseur dans le dispositif mécanique par l'intermédiaire d'un dispositif mécanique commandé à programme, et les pas de commande prévus dans le programme pour la mesure du mécanisme de roulement sont le positionnement automatique des roues sur "aller tout droit", la rotation automatique des roues à gauche ou à droite, le positionnement automatique sur la même direction singulière à gauche ou à droite, le braquage maximal de la direction et le maintien d'une roue sur 0°.

2. Procédé selon la revendication 1, **caractérisé en ce que**, les pas de commande sont groupés en groupes de pas de commande, où un groupe de pas de commande définit le mouvement des roues de l'essieu qui peut être commandé, pendant une mesure du mécanisme de roulement.

3. Procédé selon la revendication 1, **caractérisé en ce que**, les pas de commande sont groupés en pas de mesure, qui comprennent la détermination des valeurs de mesure du mécanisme de roulement avant de, pendant et après les travaux de réglage au véhicule.

4. Procédé selon l'une des revendications antérieures, **caractérisé en ce que**, les pas de commande sont des pas spécifiques au véhicule.

5. Procédé selon l'une des revendications antérieures, **caractérisé en ce qu'**à l'opérateur sont fournies des indications acoustiques et/ou optiques et/ou verbales, concernant les résultats de la mesure, les données d'entrée ou les manoeuvres nécessaires.

6. Procédé selon l'une des revendications antérieures, où la mesure du mécanisme de roulement se réalise sur un élévateur d'automobiles, **caractérisé en ce que**, la commande de l'élévateur d'automobiles se réalise aussi de l'ordinateur central.

7. Procédé selon la revendication 6, **caractérisé en ce que**, dans l'ordinateur central sont aussi prévues des hauteurs de réglage spécifiques pour la commande de l'élévateur d'automobiles, pour différents utilisateurs.

8. Procédé selon l'une des revendications antérieures, **caractérisé en ce que**, le réglage mécanique des roues ou la commande de l'élévateur d'automobiles a lieu à peine lors que l'opérateur donne une commande de déblocage vers l'ordinateur central.

9. Dispositif pour la mesure commandée à programme du mécanisme de roulement aux véhicules moteurs, avec un dispositif de mesure du mécanisme de roulement qui sous la commande d'un ordinateur central réalise les pas individuels de mesure du mécanisme de roulement, où les pas de commande sont prévus dans le programme pour la mesure du mécanisme de roulement,
**caractérisé en ce que**
un dispositif mécanique (80) commandé à programme est prevú à la commande d'un microprocesseur dans le dispositif mécanique, qui est en état respectivement de tourner et orienter les roues (24 - 30) d'un essieu qui peu être commandé dans les positions nécessaires pour la réalisation de la mesure du mécanisme de roulement et les pas de commande prévus dans le programme pour la mesure du mécanisme de roulement sont le positionnement automatique des roues sur "aller tout droit", la rotation automatique des roues à gauche ou à droite, le positionnement automatique sur la même direction singulière à gauche ou à droite, le braquage maximal de la direction et le maintien d'une roue sur 0°.

10. Dispositif selon la revendication 9, **caractérisé en ce que**, le dispositif mécanique (80) est disposé entre le volant du véhicule et un point fixe du véhicule et est en état de tourner le volant du véhicule.

11. Dispositif selon la revendication 9, **caractérisé en ce que**, sur le volant est disposé un niveau à bulle d'air, qui aussi est couplé avec le microprocesseur du dispositif mécanique (80) et transmet vers l'ordinateur central l'information relativement à la position de nul du volant.

12. Dispositif selon la revendication 9, **caractérisé en ce que**, le dispositif mécanique présente un actionnement par moteur aux soubassements rotatifs, sur lesquels les roues de l'essieu qui peut être commandé s'assoient pendant la mesure du mécanisme de roulement.

13. Dispositif selon l'une des revendications 9 à 12, **caractérisé en ce qu'**à l'ordinateur central et au dispositif mécanique (80) sont prévus des modules pour la transmission sans fil des données et des commandes entre l'ordinateur central et le dispositif mécanique.

14. Dispositif selon l'une des revendications 9 à 13, **caractérisé par** une télécommande par laquelle on peut transmettre à l'ordinateur central une commande de déblocage pour faire possible l'actionnement du dispositif mécanique (80).

15. Dispositif selon l'une des revendications 10 à 14, où la mesure du mécanisme de roulement se réalise sur un élévateur d'automobiles, qui comprend un dispositif de commande, **caractérisé en ce qu'**au dispositif de commande (48) de l'élévateur d'automobiles est prévu un module pour la transmission des données et des commandes entre le dispositif de commande de l'élévateur d'automobiles et l'ordinateur central.
